# EUROPÄISCHE PATENTSCHRIFT

(11) **EP 3 032 229 B1**
(45) Veröffentlichungstag und Bekanntmachung des Hinweises auf die Patenterteilung: **25.11.2020**
(21) Anmeldenummer: 14197005.3
(22) Anmeldetag: 09.12.2014
(51) Int. Cl.: G01F 23/296, G01F 23/00

(54) **Grenzstandmessanordnung**
Limit state measurement assembly
Système de mesure de niveau limite

(43) Veröffentlichungstag der Anmeldung: 15.06.2016
(73) Patentinhaber: VEGA Grieshaber KG, 77709 Wolfach (DE)
(72) Erfinder: Ohmayer, Gerd, 77716 Haslach (DE); Grischkat, Jochen, 78733 Aichhalden (DE); Schrempp, Daniel, 77776 Bad Rippoldsau (DE)
(74) Vertreter: Patentanwälte Bauer Vorberg Kayser

(56) Entgegenhaltungen:
- WO-A2-2004/095017
- DE-U1-202010 016 623
- US-A- 3 139 544
- US-A- 4 644 789

## Beschreibung

Die vorliegende Erfindung betrifft eine Grenzstandmessanordnung gemäß dem Oberbegriff des Patentanspruchs 1.

Derartige Grenzstandmessanordnungen sind aus dem Stand der Technik bekannt. Entsprechende Grenzstandsensoren, beispielsweise Vibrationsgrenzstandsensoren weisen beispielsweise einen piezoelektrischen oder magnetischen Antrieb auf, durch den eine Membran des Grenzstandsensors in Schwingung versetzbar ist. An der Membran ist dem Antrieb gegenüberliegend ein mechanischer Schwinger angeordnet, der in einem ersten Medium, beispielsweise Luft, mit einer vorgegebenen Frequenz schwingt. Wird der mechanische Schwinger von dem in dem Behälter befindlichen Füllgut bedeckt, so wird diese Schwingung gedämpft und diese Dämpfung vom Sensor registriert. Auf diese Weise kann die Bedeckung des Sensors mit dem Füllgut detektiert und der Grenzstand erfasst werden.

Bei derartigen Grenzstandmessanordnungen besteht unter anderem das Problem, dass diese bei Wellenbewegungen des Mediums innerhalb des Behälters oder bei Medien, die zu einer Schaumbildung neigen, zu Fehlerfassungen neigen, da sowohl eine wellenartige Bedeckung des Grenzstandsensors als auch Schaum zu einer Dämpfung der Schwingung des mechanischen Schwingers führen und eine Fehlmessung auslösen können.

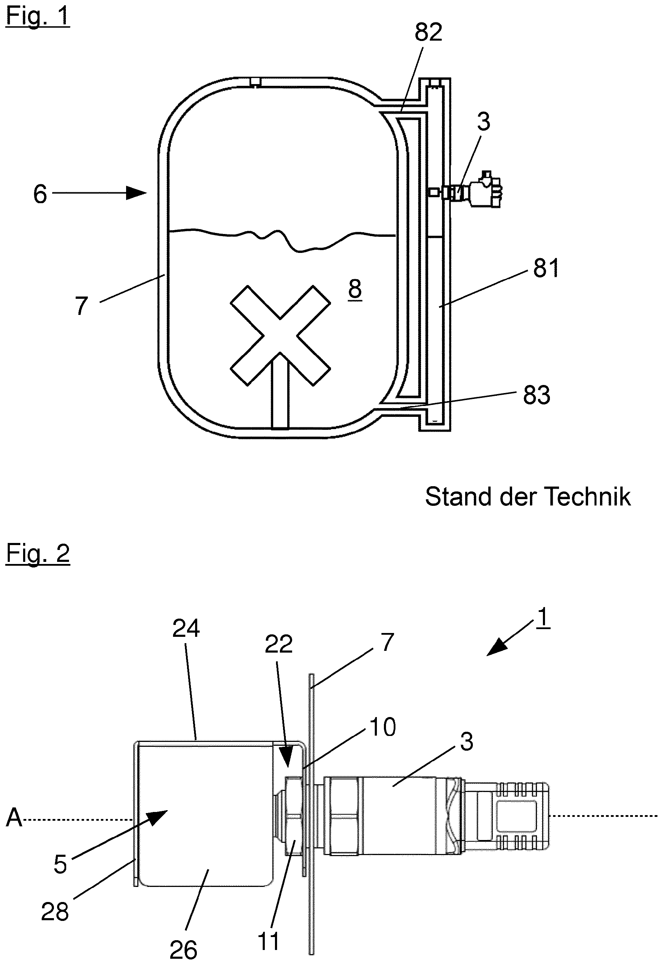

Aus dem Stand der Technik ist es daher bekannt, dass solche Anwendungen sowohl Füllstand- als auch Grenzstandmessanordnungen in einem Bypass, das heißt einem mit dem Behälter kommunizierenden aber ansonsten von diesem getrennt ausgebildeten Steigrohr anzuordnen. Eine derartige Anordnung ist in Figur 1 dargestellt.

Figur 1 zeigt einen Behälter 6 mit einem in dem Behälter 6 befindlichen flüssigen Füllgut 8, das beispielsweise auf Grund eines mechanischen Rührwerks zu Wellenbewegungen neigt. In dem in Figur 1 dargestellten Ausführungsbeispiel ist an dem Behälter 6 seitlich ein sogenannter Bypass 81 angeordnet, der über eine obere Anbindung 82 und eine untere Anbindung 83 mit dem Behälter 6 in Verbindung steht. Durch die Anbindungen 82, 83 sind kommunizierende Röhren gebildet, sodass ein Füllstand in dem Bypass 81 dem in dem Behälter 6 vorherrschenden Füllstand entspricht. Auf diese Weise kann - unter Ausblendung der Wellenbildung im Behälter 6 - eine Grenzstanderfassung in dem Bypass 81 mittels des dort angeordneten Grenzstandsensors 3 erreicht werden. Das gleiche Vorgehen kann ebenso bei Füllgütern, die zur Schaumbildung neigen, sinnvoll sein.

An der vorstehend beschriebenen Ausgestaltung wird es als nachteilig empfunden, dass ein Aufbau mit einem Bypass sehr aufwändig ist und nicht in jedem Anwendungsfall realisiert werden kann. Insbesondere unter beengten räumlichen Randbedingungen kann die Anordnung eines Bypasses nicht nur aus Kostengründen sondern auch aus Platzgründen nicht gewollt beziehungsweise möglich sein.

Es ist die Aufgabe der vorliegenden Erfindung, eine Grenzstandmessanordnung derart weiterzubilden, das sie vorzugsweise kostengünstig und einfach zu montierend auch für Anwendungsfälle mit Wellen- und/oder Schaumbildung und/oder negativ wirkenden Strömungen eingesetzt werden kann.

Diese Aufgabe wird durch Grenzstandmessanordnung mit den Merkmalen des Patentanspruchs 1 gelöst.

Die vorliegende Erfindung betrifft eine Grenzstandmessanordnung zur Überwachung eines Grenzstands eines Füllgutes mit einem an einem Behälter montierbaren Grenzstandsensor mit einer über einen Antrieb zu einer Schwingung anregbaren Membran und wenigstens einem an der Membran angeordneten mechanischen Schwinger, wobei der Grenzstandsensor eine den mechanischen Schwinger wenigstens teilweise umgreifende und/oder übergreifende Schutzeinrichtung zum Schutz des mechanischen Schwingers gegen Wellen, Schaum und Strömungen aufweist. Solche Messanordnungen sind zum Beispiel aus DE 20 2010 016623 U1, WO 2004/095 017 A2, US 4 644 789 A, oder US 3 139 544 A bekannt. Erfindungsgemäß ist die Schutzeinrichtung über einen Befestigungsbügel an dem Grenzstandsensor befestigt, wobei der Befestigungsbügel mittels einer Befestigungsvorrichtung, die als Mutter ausgebildet ist, gehaltert ist. Die Schutzvorrichtung ist derart ausgestaltet, dass sich von dem Befestigungsbügel eine Deckfläche der Schutzeinrichtung oberhalb des mechanischen Schwingers erstreckt, von der sich eine erste Seitenfläche und eine zweite Seitenfläche seitlich senkrecht nach unten erstrecken, sodass der mechanische Schwinger von diesen abgedeckt ist. Vorderseitig übergreift die Schutzeinrichtung den mechanischen Schwinger derart, dass sich eine Vorderfläche vorderseitig ebenfalls senkrecht nach unten erstreckt, wobei zwischen dem Befestigungsbügel und den gegenüberliegenden Seitenflächen der Schutzeinrichtung ein Eingriff bleibt, durch den ein Werkzeug zum Festziehen der Mutter eingeführt werden kann.

Eine entsprechende Schutzeinrichtung ist vorzugsweise derart ausgebildet, dass sie auftretende Wellen und/oder auftretenden Schaum sowie möglicherweise vorhandene Strömungen von dem mechanischen Schwinger abhält beziehungsweise diese dämpft, sodass diese negativen Einflüsse für eine Grenzstanddetektion ausgeblendet werden. Durch eine wenigstens teilweise umgreifende und/oder übergreifende Ausgestaltung der Schutzeinrichtung kann ein Überspülen des mechanischen Schwingers bei einer Wellenbildung und eine Zuspülen des Sensors mit Schaum vermieden werden, sodass diese Einflüsse für die Messung sehr gut ausgeblendet werden können.

Begriffe wie seitlich, vorderseitig, oberseitig, unterseitig und rückseitig gehen in der vorliegenden Anmeldung von einer Axialrichtung des Grenzstandsensors aus, die durch eine Längserstreckung des mechanischen Schwingers definiert ist, wobei in Axialrichtung und zum freien Ende des mechanischen Schwingers hin orientiert als vorderseitig, dazu lateral als seitlich und oberseitig und unterseitig senkrecht hierzu in Richtung eines steigenden beziehungsweise sinkenden Füllstands meint.

In sämtlichen erfindungsgemäßen Ausführungsformen ist zu berücksichtigen, dass das Füllmedium durch die Schutzeinrichtung weiterhin in Kontakt mit dem mechanischen Schwingers des Grenzstandsensors gelangen kann, sodass insgesamt eine Grenzstandmessung weiterhin möglich bleibt.

In einer Ausgestaltung der Grenzstandmessanordnung ist der mechanische Schwinger in eingebautem Zustand von der Schutzeinrichtung wenigstens seitlich und vorderseitig um- und übergriffen, das heißt, dass in eingebautem Zustand durch die Schutzeinrichtung eine Art Schutzumrandung gebildet ist, die insbesondere Wellen und/oder Schaum von dem mechanischen Schwinger abhalten kann.

Der Schwinger kann in eingebautem Zustand von der Schutzeinrichtung ferner oberseitig und unterseitig abgedeckt sein.

In einer besonders einfachen Ausgestaltung ist die Schutzeinrichtung als ein Element aus wenigstens vier aneinander grenzenden Flächen eines Quaders, von denen jede der Flächen an wenigstens zwei weitere Flächen grenzt, gebildet. Durch eine solche Schutzeinrichtung, die beispielsweise mit einer an der Schutzeinrichtung angeordneten Befestigungsmitteln an dem Behälter und/oder dem Grenzstandsensor befestigt sein kann, kann der mechanischen Schwinger beispielsweise vorderseitig, seitlich und oberseitig geeignet abgedeckt werden, dass insbesondere wellenbedingt ausgelöste Fehldetektionen vermieden werden können.

Ferner kann der mechanische Schwinger durch die Schutzeinrichtung vollständig umgriffen und vorzugsweise vorderseitig abgedeckt sein.

Die Schutzeinrichtung kann um ein Zugang des Mediums zu dem mechanischen Schwinger sicherzustellen, wenigstens teilweise eine Lochstruktur aufweisen. Durch eine derartige Lochstruktur können Wellen entsprechend gedämpft und Schäume abgehalten werden, sodass Fehldetektionen vermieden werden.

Die Lochstruktur kann dabei beispielsweise als eine regelmäßige Anordnung einer Mehrzahl von vorzugsweise kreisrunden Löchern mit einem Durchmesser von vorzugsweise wenigstens vier Millimetern ausgebildet sein. Insbesondere, wenn die Schutzeinrichtung aus Metall gefertigt ist, kann zur Herstellung ein sogenanntes Lochblech verwendet werden, was eine besonders günstige Herstellungsvariante darstellt.

Um eine optimale Korrosionsbeständigkeit der Schutzeinrichtung zu gewährleisten, kann diese bevorzugt aus Metall, beispielsweise Edelstahl, ausgebildet sein. Eine günstige Fertigung kann erreicht werden, wenn die Schutzeinrichtung in diesem Fall als Biegeteil, vorzugsweise als Stanzbiegeteil ausgebildet ist. Insbesondere bei der Ausgestaltung als Stanzbiegeteil kann die Schutzeinrichtung sehr einfach hergestellt werden.

Abhängig von dem geplanten Einsatzgebiet der Grenzstandmessanordnung kann die Schutzeinrichtung auch als Spritzgießteil, vorzugsweise als Kunststoffspritzgießteil ausgebildet sein. Bei einer Ausgestaltung als Spritzgießteil, insbesondere Kunststoffspritzgießteil, ist eine sehr kostengünstige Fertigung möglich.

Für eine einfache Befestigung der Schutzeinrichtung ist erfindungsgemäß diese mit einer Befestigungsvorrichtung des Grenzstandsensors gekoppelt und weist eigene Befestigungsmittel auf. Die Schutzeinrichtung ist mit einer Mutter, mittels derer der Grenzstandsensor in einer Behälterwand zusammen mit einer Kontermutter befestigt wird, gekoppelt, beispielsweise verklebt oder verschweißt . Eigene Befestigungsmittel der Schutzeinrichtung können beispielsweise in der Schutzeinrichtung vorgesehene Befestigungsöffnungen sein.

Zur Sicherstellung einer korrekten Arbeitsweise des Grenzstandsensors weist die Schutzeinrichtung in Axialrichtung zu dem mechanischen Schwinger bevorzugt einen Abstand von wenigstens zehn Millimetern auf.

Ein Innendurchmesser der Schutzeinrichtung oder ein Abstand gegenüberliegender Seitenflächen der Schutzeinrichtung beträgt wenigstens 30 bis 40 Millimeter, vorzugsweise 35 Millimeter, sodass auch lateral und senkrecht hierzu ein Mindestabstand von wenigstens 10 Millimeter zwischen dem mechanischen Schwinger und der Schutzeinrichtung eingehalten wird.

Die vorliegende Erfindung wird nachfolgend unter Bezugnahme auf die beigefügten Figuren eingehend erläutert. Es zeigen:
- Figur 1: einen Behälter mit einer in einem Bypass angeordneten Grenzstandmesseinrichtung gemäß dem Stand der Technik (schon behandelt),
- Figur 2: eine Seitenansicht eines ersten Ausführungsbeispiels einer Grenzstandmessanordnung mit einer Schutzeinrichtung,
- Figur 3: die Grenzstandmessanordnung aus Figur 2 in einer perspektivischen Ansicht von schräg unten,
- Figur 4: eine Seitenansicht eines zweiten nicht erfindungsgemäßen Ausführungsbeispiels einer Grenzstandmessanordnung und
- Figur 5: eine perspektivische Ansicht der Grenzstandmessanordnung aus Figur 4.

Figur 2 zeigt eine Seitenansicht eines ersten Ausführungsbeispiels einer Grenzmessanordnung 1 gemäß der vorliegenden Anmeldung.

Die Grenzstandmessanordnung 1 ist im Wesentlichen aus einem an einer vorliegend nur ausschnittweise dargestellten Behälterwand 7 angeordneten Grenzstandsensor 3 sowie einer, einem mechanischen Schwinger 9 des Grenzstandsensors 3 umgebenden Schutzeinrichtung 5 gebildet. Der Grenzstandsensor 3 definiert durch seine Längserstreckung eine Axialrichtung A, die im vorliegenden Ausführungsbeispiel zur näheren Bezeichnung der Lage der angegebenen Bauelemente des Grenzstandsensors 3 sowie der Schutzeinrichtung 5 relativ zueinander verwendet wird. Der mechanische Schwinger 9 ist vorderseitig, das heißt in Axialrichtung und in Richtung Gehäuseinneres orientiert an den Grenzstandsensor angeordnet. Der mechanische Schwinger 9 kann beispielsweise durch einen innerhalb des Grenzstandsensors 3 angeordneten Antrieb, beispielsweise einen Piezoantrieb oder einen elektromagnetisch arbeitenden Antrieb über eine in Schwingung versetzbare Membran zu Schwingungen angeregt werden. Der mechanische Schwinger 9 ist in dem in Figur 2 dargestellten Ausführungsbeispiel sowohl vorderseitig über- als auch seitlich umgriffen von der Schutzeinrichtung 5, die vorliegend über einen Befestigungsbügel 10 an dem Grenzstandsensor 3 befestigt ist. Der Befestigungsbügel 10 ist, wie aus Figur 2 ersichtlich, mittels einer Befestigungsvorrichtung 11, die vorliegend als Mutter ausgebildet ist, gehaltert.

Die Schutzvorrichtung 5 ist vorliegend derart ausgestaltet, dass sich von dem Befestigungsbügel 10 eine Deckfläche 24 der Schutzvorrichtung oberhalb des mechanischen Schwingers 9 erstreckt, von der sich eine erste Seitenfläche 26 und eine zweite Seitenfläche 27 seitlich senkrecht nach unten erstrecken, sodass der mechanische Schwinger 9 in der in Figur 2 dargestellten Seitenansicht von diesen abgedeckt ist. Der mechanische Schwinger 9 ist in diesem Fall sowohl oberseitig als auch seitlich von der Schutzeinrichtung 5 umgriffen. Vorderseitig übergreift die Schutzeinrichtung 5 den mechanischen Schwinger derart, dass sich eine Vorderfläche 28 vorderseitig ebenfalls senkrecht nach unten erstreckt.

Im vorliegenden Ausführungsbeispiel sind die Seitenflächen 26, 27 derart ausgebildet, dass zwischen dem Befestigungsbügel 10 und den Seitenflächen 26 ein Eingriff 22 bleibt, durch den ein Werkzeug zum Festziehen der Mutter 11 eingeführt werden kann. Zusätzlich oder alternativ zu einer Befestigung der Schutzeinrichtung 5 über die Befestigungsvorrichtung 11 des Grenzstandsensors 3 können auch zusätzliche Befestigungsmittel 13, beispielsweise Bohrungen, zum separaten Befestigen der Schutzeinrichtung 5 vorgesehen sein. Mittels solcher Befestigungsmittel 13 könnte die Schutzeinrichtung dann auch unabhängig von der Befestigung des Grenzstandsensors 3 an der Behälterwand 7 befestigt werden.

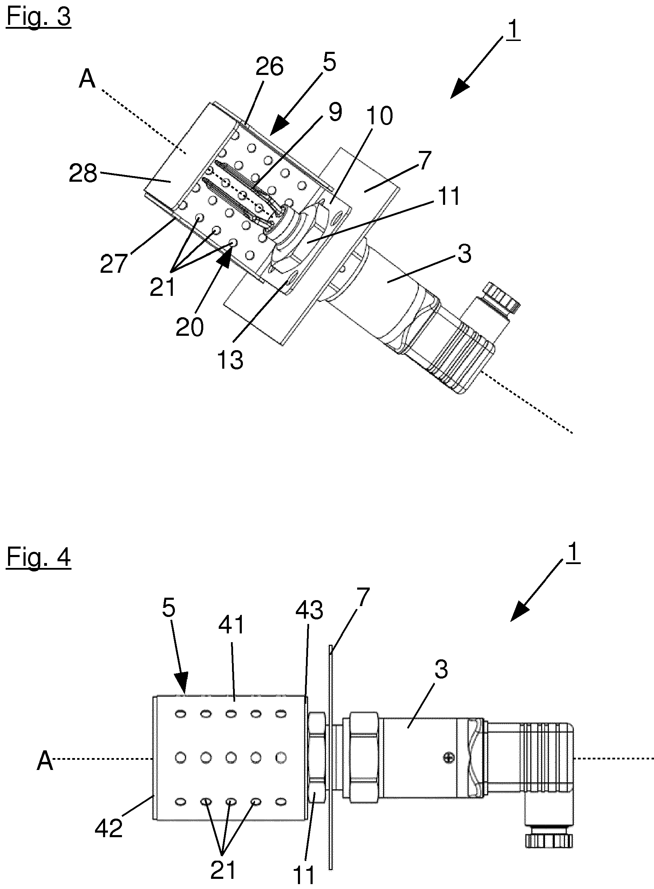

Eine perspektivische Darstellung der Anordnung aus Figur 2 ist in Figur 3 gezeigt.

Aus Figur 3 geht besonders deutlich hervor, dass die Schutzeinrichtung 5 gemäß der vorliegenden Ausführungsform besonders einfach als Stanzbiegeteil hergestellt sein kann. Sowohl der Befestigungsbügel 10 als auch die Deck-, Seiten- und Vorderflächen 24, 26, 27, 28 sind aus einem einzigen Blechteil, das in geeigneter Form ausgestanzt wurde, gebogen. Eine Bodenfläche 25, das heißt eine der Deckfläche gegenüberliegend parallel angeordnete Fläche, die den mechanischen Schwinger 9 von unten her abdecken würde, ist im vorliegenden Ausführungsbeispiel nicht vorgesehen. Die Deckfläche 24 ist im vorliegenden Ausführungsbeispiel außerdem mit einer Mehrzahl von regelmäßig angeordneten kreisrunden Löchern 21 versehen, sodass eine Lochstruktur 20 gebildet ist. Durch eine derartige Lochstruktur 20 kann gewährleistet werden, dass ein von unten in dem Bereich des mechanischen Schwingers 9 eindringendes Medium auch oberseitig wieder austreten kann.

Die gezeigte Anordnung kann beispielsweise zur Verhinderung von Fehlmessungen auf Grund von Wellenbewegungen innerhalb des Behälters verwendet werden. Je nach konkreter Anwendung kann auch eine Anordnung sinnvoll sein, bei der auch eine Bodenfläche, die beispielsweise ebenfalls mit einer Lochstruktur 20 versehen sein kann, vorgesehen ist.

Eine besonders einfache Herstellung einer solchen Schutzeinrichtung kann erreicht werden, wenn diese ohne Bodenfläche hergestellt wird, da eine Bildung des in Figur 2 dargestellten Ausführungsbeispiels über lediglich vier 90 Grad-Abkantungen aus einem zuvor aus gestanzten, aus gelaserten Wasserstrahl geschnittenen oder anderweitig zur Verfügung gestellten Zuschnitt fertigbar ist. Es kann auf diese Weise durch einen einfachen Aufbau eine stabile, einfach herzustellende, einfach zu montierende, kostengünstige und korrosionsbeständige Lösung der aus dem Stand der Technik bekannten Probleme zur Verfügung gestellt werden. Dies ist insbesondere auch einteilig herzustellen, sodass keine unnötige Erhöhung der Zahl der notwendigen Bauteile stattfindet.

In Figur 4 ist eine Grenzstandmesseinrichtung 1 mit einer alternativen Ausgestaltung der Schutzeinrichtung 5 in Seitenansicht dargestellt.

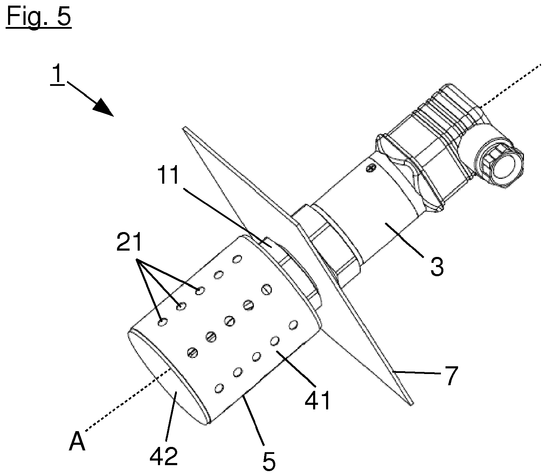

Die Schutzeinrichtung 5 ist in diesem Ausführungsbeispiel als Schutzkorb ausgeführt, wobei der Schutzkorb im Wesentlichen zylinderförmig ausgebildet ist. An eine Zylinderfläche 42, die vorderseitig des mechanischen Schwingers 9 angeordnet ist, schließt sich ein Zylindermantel 41 mit einer aus Löchern 21 gebildeten Lochstruktur an, der rückseitig mit einer Rückfläche 43 mit einer Durchgangsöffnung für den mechanischen Schwinger abgeschlossen ist. Die Zylinderfläche 42 ist im vorliegenden Ausführungsbeispiel, wie aus Figur 5 näher ersichtlich ist, kreisförmig ausgebildet, sodass die Schutzeinrichtung 5 im Wesentlichen die Form eines Kreiszylinders aufweist.

An der Rückfläche 43 der Schutzeinrichtung 5 ist die als Befestigungsvorrichtung 11 vorgesehene Mutter zur Befestigung des Grenzstandsensors 3 befestigt, beispielsweise angeschweißt. Der Zylindermantel 41 kann im vorliegenden Ausführungsbeispiel sowohl als ein mit Löchern versehener Rohrabschnitt als auch als ein rundgebogenes und längsverschweißtes Lochblech ausgestaltet sein. Der Zylindermantel 41 ist vorderseitig mit der Zylinderfläche 42 und rückseitig mit der Rückfläche 43 umlaufend verbunden, beispielsweise verschweißt, sodass sich eine im Wesentlichen, bis auf die Lochstruktur geschlossene, Anordnung ergibt.

In Figur 5 ist die Grenzstandmessanordnung 1 aus Figur 4 in einer perspektivischen Darstellung gezeigt. Aus dieser Darstellung geht insbesondere die kreisrunde Ausgestaltung der Zylinderfläche 42 sowie die sich daraus ergebende Kreiszylinderform der Schutzeinrichtung 5 hervor.

Durch die Kombination der Befestigungsvorrichtung 11 mit der Schutzeinrichtung 5 kann insbesondere eine Reduktion der notwendigen Bauelemente erreicht werden. Durch eine rotationssymmetrische Ausgestaltung der Schutzeinrichtung 5 kann ferner erreicht werden, dass keine besondere Ausrichtung der Schutzreinrichtung 5, die beispielsweise an den Grenzstandsensor 3 montiert sein kann, notwendig ist. Tests haben ergeben, dass zur Sicherstellung einer fehlerfreien Funktion des mechanischen Schwingers 9 ein umlaufender Abstand der Schutzeinrichtung 5 zu dem mechanischen Schwinger 9 von wenigstens zehn Millimetern in axialer Richtung notwendig ist. Um den Grenzstandsensor wird ein mindestens einzuhaltender Durchmesser von 25 Millimeter oder 45 Millimeter mit bevorzugt 35 Millimeter gefordert. Siehe auch den entsprechenden Anspruch.

Es sei an dieser Stelle erwähnt, dass die vorgenannten Ausführungsbeispiele, die aus Metall gebildet sind, die vorliegende Erfindung nicht auf diese Materialwahl beschränken. Vielmehr ist es auch möglich, entsprechende Ausgestaltungen einer Schutzeinrichtung aus Kunststoff, beispielsweise als Spritzgießteile, herzustellen und entsprechend vorteilhaft einzusetzen.

### Bezugszeichenliste

- 1: Grenzstandmessanordnung
- 3: Grenzstandsensor
- 5: Schutzeinrichtung
- 6: Behälter
- 7: Behälterwand
- 8: Füllgut
- 9: Mechanischer Schwinger
- 10: Befestigungsbügel
- 11: Befestigungsvorrichtung, Mutter
- 13: Befestigungsmittel, Bohrungen

- 20: Lochstruktur
- 21: Löcher
- 22: Eingriff
- 24: Deckfläche
- 25: Bodenfläche
- 26: Erste Seitenfläche
- 27: Zweite Seitenfläche
- 28: Vorderfläche

- 41: Zylindermantel
- 42: Zylinderfläche
- 43: Rückfläche

- 81: Bypass
- 82: Obere Anbindung
- 83: Untere Anbindung

- A: Axialrichtung

## Patentansprüche

1. Grenzstandmessanordnung (1) zur Überwachung eines Grenzstands eines Füllgutes (8) mit einem an einer Behälterwand (6) montierbaren Grenzstandsensor (3), wobei der Grenzstandsensor (3) eine einen mechanischen Schwinger (9) wenigstens teilweise umgreifende und/oder übergreifende Schutzeinrichtung (5) zum Schutz des mechanischen Schwingers (9) gegen Wellen, Schaum und Strömungen aufweist
**dadurch gekennzeichnet, dass**
die Schutzeinrichtung (5) über einen Befestigungsbügel (10) an dem Grenzstandsensor (3) befestigt ist, wobei der Befestigungsbügel (10) mittels einer Befestigungsvorrichtung (11), die als Mutter ausgebildet ist, gehaltert ist, wobei die Schutzvorrichtung (5) derart ausgestaltet ist, dass sich von dem Befestigungsbügel (10) eine Deckfläche (24) der Schutzeinrichtung (5) oberhalb des mechanischen Schwingers (9) erstreckt, von der sich eine erste Seitenfläche (26) und eine zweite Seitenfläche (27) seitlich senkrecht nach unten erstrecken, sodass der mechanische Schwinger (9) von diesen abgedeckt ist, und wobei vorderseitig die Schutzeinrichtung (5) den mechanischen Schwinger (9) derart übergreift, dass sich eine Vorderfläche (28) vorderseitig ebenfalls senkrecht nach unten erstreckt, wobei zwischen dem Befestigungsbügel (10) und den gegenüberliegenden Seitenflächen (26, 27) der Schutzeinrichtung (5) ein Eingriff (22) bleibt, durch den ein Werkzeug zum Festziehen der Mutter (11) eingeführt werden kann.

2. Grenzstandmessanordnung (1) gemäß Anspruch 1,
**dadurch gekennzeichne**t, dass
der Grenzstandssensor (9) vorzugsweise eine über einen Antrieb zu einer Schwingung anregbaren Membran und wenigstens einen an der Membran angeordneten mechanischen Schwinger (9) aufweist und in eingebautem Zustand von der Schutzeinrichtung (5) wenigstens seitlich und vorderseitig um- und übergriffen ist.

3. Grenzstandmessanordnung (1) gemäß einem der vorhergehenden Ansprüche,
**dadurch gekennzeichne**t, dass
der mechanische Schwinger (9) in eingebautem Zustand von der Schutzeinrichtung (5) oberseitig und/oder unterseitig abgedeckt ist.

4. Grenzstandmessanordnung (1) gemäß den Ansprüchen 2 und 3,
**dadurch gekennzeichne**t, dass
die Schutzeinrichtung (5) als ein Element aus wenigstens vier aneinander grenzenden Flächen eines Quaders von denen jede der Flächen an wenigstens zwei weitere Flächen grenzt, gebildet ist.

5. Grenzstandmessanordnung (3) gemäß Anspruch 1,
**dadurch gekennzeichne**t, dass
der mechanische Schwinger (9) durch die Schutzeinrichtung (5) vollständig umgriffen und vorzugsweise vorderseitig abgedeckt ist.

6. Grenzstandmessanordnung (1) gemäß einem der vorhergehenden Ansprüche,
**dadurch gekennzeichne**t, dass
die Schutzeinrichtung (5) wenigstens teilweise eine Öffnungs- oder Lochstruktur (20) aufweist, wobei die Lochstruktur (20) als eine regelmäßige Anordnung einer Mehrzahl von Löchern (21) ausgebildet ist.

7. Grenzstandmessanordnung (1) gemäß Anspruch 6,
**dadurch gekennzeichne**t, dass
die Lochstruktur (21) als eine regelmäßige Anordnung einer Mehrzahl von kreisrunden Löchern (21) mit einem Durchmesser von vorzugsweise wenigstens 4 Millimeter ausgebildet ist.

8. Grenzstandmessanordnung (1) gemäß einem der vorhergehenden Ansprüche,
**dadurch gekennzeichne**t, dass
die Schutzeinrichtung (5) aus Metall und als ein Stanzbiegeteil ausgebildet ist.

9. Grenzstandmessanordnung (1) gemäß einem der Ansprüche 1 bis 6,
**dadurch gekennzeichne**t, dass
die Schutzeinrichtung (5) als ein Spritzgießteil, vorzugsweise ein Kunststoffspritzgießteil ausgebildet ist.

10. Grenzstandmessanordnung (1) gemäß einem der vorhergehenden Ansprüche,
**dadurch gekennzeichne**t, dass
die Schutzeinrichtung (5) in Axialrichtung (A) zu dem mechanischen Schwinger (9) einen Abstand von wenigstens 10 Millimeter aufweist.

11. Grenzstandmessanordnung (1) gemäß einem der vorhergehenden Ansprüche,
**dadurch gekennzeichne**t, dass
ein Innendurchmesser der Schutzeinrichtung (5) oder ein Abstand zwischen der gegenüberliegenden Seitenflächen (26, 27) der Schutzeinrichtung (5) wenigstens 30 bis 40 Millimeter, vorzugsweise 35 Millimeter, beträgt.

## Claims

1. A limit level measuring assembly (1) for monitoring a limit level of a product (8) with a limit level sensor (3) that can be mounted on a container wall (6), wherein the limit level sensor (3) comprises a protective device (5) which, at least partially, encompasses and/or reaches over a mechanical oscillator (9), for protecting the mechanical oscillator (9) against waves, foam and currents,
**characterized in that**
the protective device (5) is attached to the limit level sensor (3) via an attachment bracket (10), wherein the attachment bracket (10) is retained by means of an attachment member (11) configured as a nut, wherein the protective device (5) is configured in such a way that a covering surface (24) of the protective device (5) extends from the attachment bracket (10) above the mechanical oscillator (9), from which a first side surface (26) and a second side surface (27) extend laterally and vertically downwards, so that the mechanical oscillator (9) is covered by them, and wherein the protective device (5) reaches over the mechanical oscillator (9) on the front side in such a way that a front surface (28) on the front side also extends vertically downwards, wherein a gap (22), through which a tool for tightening the nut (11) can be inserted, remains between the attachment bracket (10) and the opposing side surfaces (26, 27) of the protective device (5).

2. The limit level measuring assembly (1) according to claim 1,
**characterized in that**
the limit level sensor (9) preferably has a diaphragm that can be excited to oscillate by means of a drive unit and at least one mechanical oscillator (9) disposed on the membrane and, in the installed state, the protective device (5) encompasses and reaches over it at least laterally and on the front side.

3. The limit level measuring assembly (1) according to any one of the preceding claims,
**characterized in that**
in the installed state, the mechanical oscillator (9) is covered on the top side and/or the underside by the protective device (5).

4. The limit level measuring assembly (1) according to the claims 2 and 3,
**characterized in that**
the protective device (5) is configured as a member consisting of at least four adjacent surfaces of a cuboid, each of which surfaces is adjacent to at least two further surfaces.

5. The limit level measuring assembly (3) according to claim 1,
**characterized in that**
the mechanical oscillator (9) is completely encompassed and preferably covered on the front side by the protective device (5).

6. The limit level measuring assembly (1) according to any one of the preceding claims,
**characterized in that**
the protective device (5) at least partially has an opening or hole structure (20), wherein the hole structure (20) is configured as a regular arrangement of a plurality of holes (21).

7. The limit level measuring assembly (1) according to claim 6,
**characterized in that**
the hole structure (21) is configured as a regular arrangement of a plurality of circular holes (21) with a diameter of preferably at least 4 millimeters.

8. The limit level measuring assembly (1) according to any one of the preceding claims,
**characterized in that**
the protective device (5) is formed from metal and as a stamped-bent part.

9. The limit level measuring assembly (1) according to any one of the claims 1 to 6,
**characterized in that**
the protective device (5) is formed as an injection molded part, preferably as a plastic injection molded part.

10. The limit level measuring assembly (1) according to any one of the preceding claims,
**characterized in that**
in the axial direction (A), the protective device (5) has a distance of at least 10 millimeters from the mechanical oscillator (9).

11. The limit level measuring assembly (1) according to any one of the preceding claims,
**characterized in that**
an inner diameter of the protective device (5) or a distance between the opposing side surfaces (26, 27) of the protective device (5) is at least 30 to 40 millimeters, preferably 35 millimeters.

## Revendications

1. Ensemble de mesure de niveau limite (1) destiné à surveiller un niveau limite d'un produit de remplissage (8), comprenant un capteur de niveau limite (3) qui peut être monté sur une paroi de récipient (6), dans lequel ledit capteur de niveau limite (3) comprend un dispositif de protection (5) qui s'étend, au moins en partie, autour d'un et/ou sur un oscillateur mécanique (9) et sert à protéger ledit oscillateur mécanique (9) contre les ondes, la mousse et les courants, **caractérisé par le fait que** le dispositif de protection (5) est fixé au capteur de niveau limite (3) par l'intermédiaire d'une bride de fixation (10), dans lequel ladite bride de fixation (10) est maintenue au moyen d'un dispositif de fixation (11) qui est réalisé en tant qu'écrou, dans lequel le dispositif de protection (5) est conçu de telle sorte qu'une surface supérieure (24) du dispositif de protection (5) s'étend depuis la bride de fixation (10) au-dessus de l'oscillateur mécanique (9), à partir de laquelle une première surface latérale (26) et une deuxième surface latérale (27) s'étendent latéralement et verticalement vers le bas de sorte que l'oscillateur mécanique (9) est recouvert par celles-ci, et dans lequel le dispositif de protection (5) chevauche l'oscillateur mécanique (9) sur la face avant de telle sorte qu'une surface avant (28) s'étend également verticalement vers le bas sur la face avant, entre la bride de fixation (10) et les surfaces latérales (26, 27) opposées du dispositif de protection (5) restant un évidement (22) à travers lequel un outil de serrage de l'écrou (11) peut être inséré.

2. Ensemble de mesure de niveau limite (1) selon la revendication 1, **caractérisé par le fait que** le capteur de niveau limite (9) comprend de préférence une membrane qui peut être excitée pour vibrer par l'intermédiaire d'un entraînement ainsi qu'au moins un oscillateur mécanique (9) disposé sur la membrane, et est, à l'état monté, entouré et superposé, au moins latéralement et sur la face avant, par le dispositif de protection (5).

3. Ensemble de mesure de niveau limite (1) selon l'une quelconque des revendications précédentes, **caractérisé par le fait que**, à l'état monté, l'oscillateur mécanique (9) est recouvert sur la face supérieure et/ou sur la face inférieure par le dispositif de protection (5).

4. Ensemble de mesure de niveau limite (1) selon les revendications 2 et 3, **caractérisé par le fait que** le dispositif de protection (5) est réalisé comme un élément se composant d'au moins quatre surfaces adjacentes d'un parallélépipède rectangle, dont chacune des surfaces est adjacente à au moins deux autres surfaces.

5. Ensemble de mesure de niveau limite (3) selon la revendication 1, **caractérisé par le fait que** l'oscillateur mécanique (9) est entouré complètement par le dispositif de protection (5) et est, de préférence, recouvert sur la face avant.

6. Ensemble de mesure de niveau limite (1) selon l'une quelconque des revendications précédentes, **caractérisé par le fait que** le dispositif de protection (5) présente au moins en partie une structure à ouvertures ou à trous (20), dans lequel ladite structure à trous (20) est réalisé comme un agencement régulier d'une pluralité de trous (21),

7. Ensemble de mesure de niveau limite (1) selon la revendication 6, **caractérisé par le fait que** la structure à trous (21) est conçue comme un agencement régulier d'une pluralité de trous circulaires (21) ayant un diamètre de préférence d'au moins 4 millimètres.

8. Ensemble de mesure de niveau limite (1) selon l'une quelconque des revendications précédentes, **caractérisé par le fait que** le dispositif de protection (5) est réalisé à partir de métal et en tant que pièce découpée et pliée.

9. Ensemble de mesure de niveau limite (1) selon l'une quelconque des revendications 1 à 6, **caractérisé par le fait que** le dispositif de protection (5) est réalisé en tant que pièce moulée par injection, de préférence en tant que pièce moulée par injection en matière plastique.

10. Ensemble de mesure de niveau limite (1) selon l'une quelconque des revendications précédentes, **caractérisé par le fait que** le dispositif de protection (5) présente, dans la direction axiale (A), une distance d'au moins 10 millimètres par rapport à l'oscillateur mécanique (9).

11. Ensemble de mesure de niveau limite (1) selon l'une quelconque des revendications précédentes, **caractérisé par le fait qu'**un diamètre intérieur du dispositif de protection (5) ou une distance existant entre les surfaces latérales (26, 27) opposées du dispositif de protection (5) est d'au moins 30 à 40 millimètres, de préférence il/elle est de 35 Millimètres.
